# FASCICULE DE BREVET EUROPEEN

(11) **EP 4 401 951 B1**
(45) Date de publication et mention de la délivrance du brevet: **27.08.2025**
(21) Numéro de dépôt: 22789629.7
(22) Date de dépôt: 14.09.2022
(51) Int. Cl.: B29C 65/78, B29C 65/48, F01D 5/28, B29C 65/52, B29C 65/14, B29L 31/08

(54) **INSTALLATION ET PROCÉDÉ D'APPAIRAGE D'UN BOUCLIER SUR UNE PRÉFORME POUR LA RÉALISATION D'UNE AUBE DE TURBOMACHINE D'AÉRONEF**
ANLAGE UND VERFAHREN ZUR PAARUNG EINES SCHILDES MIT EINER VORFORM ZUR HERSTELLUNG EINER FLUGZEUGTURBINENMOTORSCHAUFEL
FACILITY AND METHOD FOR PAIRING A SHIELD TO A PREFORM FOR THE PRODUCTION OF AN AIRCRAFT TURBINE ENGINE BLADE

(30) Priorité: 17.09.2021 FR 2109780
(43) Date de publication de la demande: 24.07.2024
(73) Titulaire: SAFRAN, 75015 Paris (FR)
(72) Inventeur: CHAUVIN, Thierry Patrick, 77550 MOISSY-CRAMAYEL (FR); BAZIN, Benoît, 77550 MOISSY-CRAMAYEL (FR); TOUZE, Adrien, 77550 MOISSY-CRAMAYEL (FR)
(74) Mandataire: Gevers & Orès
(86) Numéro de dépôt international: PCT/FR2022/051725
(87) Numéro de publication internationale: WO 2023/041870

(56) Documents cités:
- US-A1- 2018 111 332

## Description

### Domaine technique de l'invention

La présente invention concerne une installation et un procédé d'appairage d'un bouclier sur une préforme pour la réalisation d'une aube de turbomachine d'aéronef.

### Arrière-plan technique

L'arrière-plan technique comprend notamment le document US-A1-2018/111332.

L'utilisation de matériaux composites est avantageuse dans l'industrie aéronautique notamment car ces matériaux ont des performances mécaniques intéressantes pour des masses relativement faibles.

Un procédé de fabrication d'une pièce composite pour l'industrie aéronautique, qui est bien connu de l'homme du métier, est le procédé de moulage RTM dont les initiales font référence à l'acronyme anglo-saxon de *Resin Transfer Molding.*

Il s'agit d'un procédé de réalisation d'une pièce en matériau composite à base de fibres tissées et de résine. Un tel procédé est par exemple utilisé pour fabriquer une aube de turbomachine. Une préforme fibreuse est réalisée puis placée dans un moule de thermocompression. Dans le cas où les fibres tissées ne sont pas préalablement imprégnées de résine, une résine est injectée dans ce moule. Cette préforme est ensuite chauffée pour que la résine polymérise et forme une préforme en matériau composite.

Dans le cas de la fabrication d'une aube, la préforme en matériau composite comprend un intrados et un extrados qui s'étendent depuis un bord d'attaque jusqu'à un bord de fuite de la préforme en matériau composite.

Le matériau composite est relativement fragile, et en particulier sensible aux chocs, et il est connu de le protéger au moyen d'un bouclier métallique, appelé également clinquant métallique, qui est rapporté et fixé sur le bord d'attaque de la préforme en matériau composite, dans le but de réaliser l'aube. Il permet de protéger le bord d'attaque de l'érosion mais également d'améliorer la solidité de l'aube face aux ingestions (grêle, gravillons, débris, oiseaux, etc.).

Une façon de fixer un bouclier sur une préforme consiste à coller le bouclier sur la préforme en matériau composite à l'aide d'un adhésif, après polymérisation de la résine dans une opération dite d'appairage réalisée manuellement par un opérateur.

L'appairage se faisant à la main, les paramètres d'appairage sont très difficilement contrôlables ou enregistrables. Seule compte la distance entre la position d'une tête du bouclier et la préforme. La mesure associée correspond au jeu entre le bouclier et la préforme au niveau de la tête du bouclier, ce jeu étant également appelé par son terme anglo-saxon « *Tip Gap* ». Ce jeu est mesuré par l'opérateur à l'aide d'un pied à coulisse. Si la valeur est dans la tolérance requise, l'assemblage est considéré comme bon et terminé, sinon l'opérateur poursuit la descente du bouclier jusqu'à atteindre la mesure du jeu requise.

Seul le résultat final est contrôlé et validé via la mesure du jeu entre la tête du bouclier et la préforme. Ainsi, la méthode pour arriver au résultat n'est pas monitorée et reste très majoritairement dépendante de l'opérateur, c'est-à-dire du facteur humain, ce qui ne permet pas de garantir la robustesse du procédé d'assemblage. La variabilité de l'opération est par conséquence très importante.

Le risque de non-qualité est ainsi élevé et nécessite, pour être maitrisé, un haut niveau de qualification des opérateurs. En outre, cette non-qualité étant détectée après collage du bouclier sur la préforme, tout défaut ne sera pas rattrapable et entrainera une mise au rebut de l'aube assemblée.

Par ailleurs, la durée de l'opération manuelle est chronophage.

La présente invention a notamment pour but de résoudre tout ou partie des problèmes précités.

### Résumé de l'invention

L'invention propose à cet effet une installation d'appairage d'un bouclier métallique sur un bord d'attaque d'une préforme en matériau composite pour la fabrication d'une aube de turbomachine d'aéronef, cette installation comprenant :
- un support configuré pour recevoir et maintenir le bouclier métallique,
- un hexapode de mouvement qui porte ledit support et qui est apte à déplacer le support le long et autour de trois axes d'un repère XYZ,
- un automate comportant des mors configuré pour recevoir et maintenir la préforme, et
- une unité informatique de commande de l'hexapode et de l'automate en vue de réaliser l'appairage.

L'invention propose ainsi une installation permettant d'assembler de manière automatisée le bouclier métallique avec la préforme. Plus précisément, l'installation de l'invention permet l'approche, la mise en position suivant l'exigence d'appairage et le maintien du bouclier métallique sur la préforme dans le but de former une aube. Cette solution utilise notamment un robot parallèle, appelé hexapode, capable notamment de suivre des trajectoires complexes avec une grande précision, de prendre en compte de grands efforts à l'assemblage et doté d'une grande rapidité de mouvement. Le bouclier à assembler est positionné et fixé sur le support, lui-même installé sur l'hexapode. La préforme, quant à elle, est positionnée dans des mors situés sur l'automate, et se place par exemple au-dessus de l'hexapode. Elle sera par exemple fixe durant l'assemblage, c'est-à-dire qu'uniquement l'hexapode comprenant le bouclier se déplace pour effectuer l'opération d'appairage. La trajectoire d'assemblage peut ainsi être dessinée numériquement, en particulier sur un logiciel informatique de l'unité informatique de commande et correspondre aux exigences jugées pertinentes pour l'opération d'appairage. Dans la présente demande, l'unité informatique est par exemple un ordinateur.

L'installation permet également de piloter finement la position d'arrêt pour respecter parfaitement la mesure du jeu « *tip gap »* à atteindre. L'ensemble est notamment maintenu fixe grâce à l'automate qui maintien la préforme et l'hexapode qui maintient le bouclier.

L'appairage automatique offert par l'installation selon l'invention permet notamment de diminuer considérablement les erreurs liées au facteur humain, de garantir une répétabilité et une reproductibilité qui confère un niveau de maîtrise plus élevé. De plus, l'automatisation permet de diminuer les délais du procédé d'appairage, de libérer l'opérateur, de réduire le coût de l'opération et de proposer une ergonomie de qualité.

En outre, l'installation selon l'invention permet de monitorer et d'enregistrer les paramètres d'assemblage permettant notamment d'améliorer le contrôle et le pilotage de l'appairage.

L'installation d'appairage selon l'invention peut comprendre une ou plusieurs des caractéristiques ci-dessous, prises isolément les unes avec les autres ou en combinaison les unes avec les autres :
- l'hexapode de mouvement comprend une embase et un plateau situé à distance de l'embase et destiné à recevoir ledit support, le plateau et l'embase étant reliés l'un à l'autre par au moins trois paires de vérins, le plateau comportant au moins trois premiers points régulièrement répartis autour d'un axe X qui sont reliés à des premières extrémités des vérins, et l'embase comportant six seconds points autour de l'axe X qui sont reliés à des secondes extrémités des vérins ;
- l'embase est horizontale et le plateau est situé au-dessus de l'embase ;
- ledit support comprend une plateforme comportant une extrémité inférieure fixée sur l'hexapode et une extrémité supérieure comportant une empreinte de réception et de maintien du bouclier métallique ;
- l'installation comprend en outre au moins un élément de chauffage porté par l'automate, tel que par exemple une lampe IR ;
- l'automate comprend un portique ou une cabine au centre duquel est situé ledit hexapode de mouvement ; et
- l'installation comprend en outre un outil de mesure sans contact, et par exemple optique, d'une dimension d'un jeu laissé libre entre le bord d'attaque de la préforme et le bouclier après appairage.

L'invention concerne également un procédé d'appairage d'un bouclier métallique sur un bord d'attaque d'une préforme en matériau composite pour la fabrication d'une aube de turbomachine d'aéronef, au moyen d'une installation telle que décrite précédemment, dans lequel il comprend les étapes consistant à :
a) positionner le bouclier métallique sur le support, ce bouclier métallique ayant une forme générale de dièdre et comportant deux ailes reliées ensemble et définissant entre elles un espace, le bouclier étant maintenu sur le support de sorte que ledit espace soit orienté vers le haut,
b) prise de la préforme par les mors de l'automate, et
c) appairage du bouclier sur la préforme de façon à ce qu'un bord d'attaque de la préforme soit engagé dans ledit espace.

Le procédé selon l'invention peut comprendre une ou plusieurs des caractéristiques ci-dessous, prises isolément les unes avec les autres ou en combinaison les unes avec les autres :
- comprend, entre les étapes a) et b), une étape consistant à :
   i) fixer une extrémité de la préforme à un bras solidaire du support, de façon à ce que la préforme s'étende à proximité du bouclier.
- comprend, entre les étapes i) et b), une étape consistant à :
   j) positionner le support sur l'hexapode.
- comprend, avant l'étape c), une étape consistant à :
   k) appliquer un adhésif sur le bord d'attaque de la préforme et/ou sur le bouclier.
- comprend, après l'étape k), une étape consistant à :
   l) chauffer l'adhésif.
- comprend, après l'étape c), une étape consistant à :
   d) vérifier l'appairage en mesurant, au niveau d'une extrémité de la préforme, une dimension d'un jeu laissé libre entre le bord d'attaque de la préforme et le bouclier.
- l'étape d) est réalisée par une mesure sans contact et par exemple une mesure optique.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une représentation schématique en perspective d'une aube formée par l'appairage d'un bouclier métallique et d'une préforme selon l'invention ;
[Fig.2] la figure 2 est une représentation schématique en coupe d'un bord d'attaque de la préforme et du bouclier inséré autour de la préforme ;
[Fig.3] la figure 3 est une représentation schématique en perspective d'une installation d'appairage d'un bouclier métallique sur un bord d'attaque d'une préforme en matériau composite selon l'invention;
[Fig.4] la figure 4 est une représentation schématique vue du dessus d'un hexapode de l'installation d'appairage selon l'invention ;
[Fig.5] la figure 5 est une représentation schématique en perspective d'un bouclier métallique installé sur un support disposé sur l'hexapode ;
[Fig.6] la figure 6 est une représentation schématique en perspective d'un dispositif de centrage et de serrage du support installé sur l'hexapode ;
[Fig.7] la figure 7 est une représentation schématique en perspective d'un système de chauffage de l'installation d'appairage selon l'invention ;
[Fig.8] la figure 8 est une représentation schématique en perspective du support et du bouclier ;
[Fig.9-10] les figures 9 et 10 sont des représentations schématiques en perspective du support et du bouclier ;
[Fig.11] la figure 11 est une représentation schématique en perspective de la préforme ;
[Fig.12] la figure 12 est une représentation schématique en perspective de l'installation d'appairage selon l'invention au moment d'un chargement du support, du bouclier et de la préforme ;
[Fig.13-14] les figures 13 et 14 sont des représentations schématiques en perspective de l'installation selon l'invention lors de l'appairage du bouclier avec la préforme ;
[Fig.15] la figure 15 est une représentation schématique en perspective de l'installation d'appairage selon l'invention au moment d'un déchargement du support, du bouclier et de l'aube ; et
[Fig.16] la figure 16 est un organigramme représentant les différentes étapes d'un procédé d'appairage selon l'invention.

### Description détaillée de l'invention

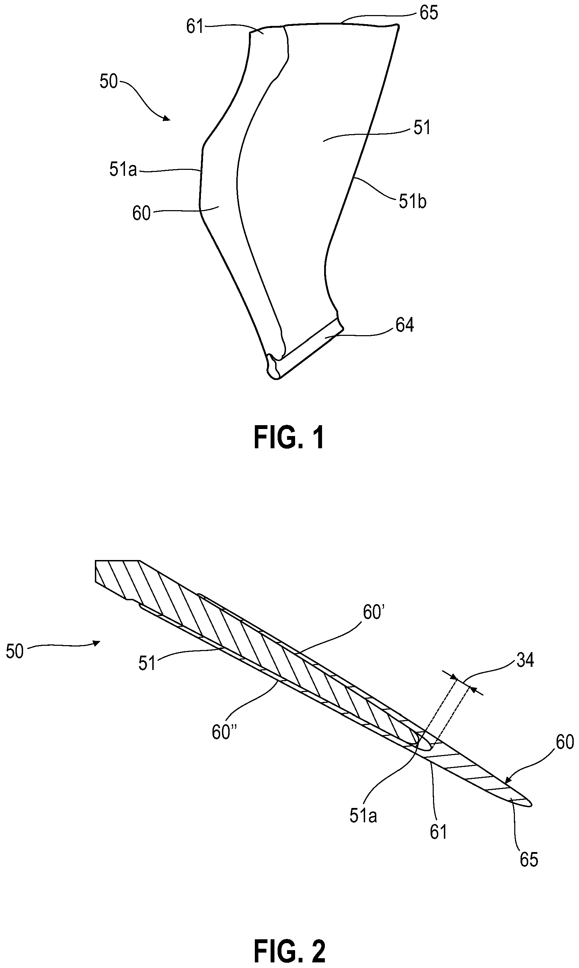

Nous nous référons dans un premier temps aux figures 1 et 2 représentant une aube 50 de turbomachine d'aéronef fabriquée grâce à une installation d'appairage selon l'invention. Une telle aube 50 comprend une préforme 51 en matériau composite et un bouclier 60, notamment métallique. La préforme 51 est constituée notamment d'une préforme fibreuse imprégnée d'une matrice faite en résine. Le bouclier 60 est appelé également clinquant et présente notamment une fonction de renfort de l'aube 50. L'aube s'étend en particulier d'un pied 64 d'aube à une tête 65 d'aube.

La préforme 51 comprend en particulier un intrados et un extrados qui s'étendent depuis un bord d'attaque 51a jusqu'à un bord de fuite 51b de la préforme.

Le bouclier métallique 60 a une forme générale de dièdre et comporte deux ailes 60', 60" reliées ensemble et définissant entre elles un espace dans lequel va venir se loger le bord d'attaque 51a de la préforme 51 lors d'un procédé d'appairage selon l'invention.

La préforme 51 en matériau composite est par exemple réalisée en plaçant une préforme fibreuse dans un moule de thermocompression.

L'assemblage formé par le bouclier 60 et la préforme 51 forme l'aube 50.

Un des paramètres de contrôle de l'appairage correspond à la mesure d'une dimension d'un jeu 34, notamment appelé « *tip gap* », laissé libre entre le bord d'attaque 51a de la préforme 51 et le bouclier 60 après appairage, mesure qui est notamment prise au niveau de la tête 61 du bouclier 60 située en vis-à-vis d'une extrémité de la préforme 51, dite tête de la préforme 51.

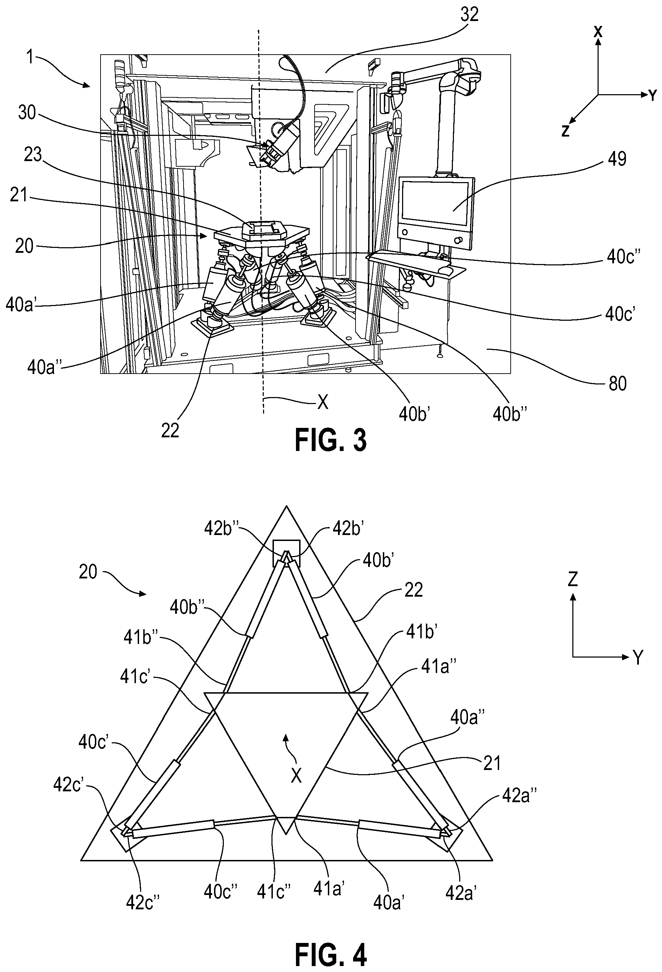

Une installation 1 d'appairage du bouclier métallique 60 sur le bord d'attaque 51a de la préforme 51 en matériau composite pour la fabrication de l'aube 50 de turbomachine d'aéronef selon l'invention est illustrée sur la figure 3. On entend par appairage le fait de positionner précisément deux objets, ici le bouclier métallique 60, sur le bord d'attaque 51a de la préforme 51 en matériau composite. La fixation entre le bouclier 60 et la préforme 51 se fait notamment par l'intermédiaire d'un adhésif 55 positionné entre le bouclier 60 et la préforme 51, c'est-à-dire positionné sur le bouclier 60 et/ou la préforme 51 préalablement à l'appairage.

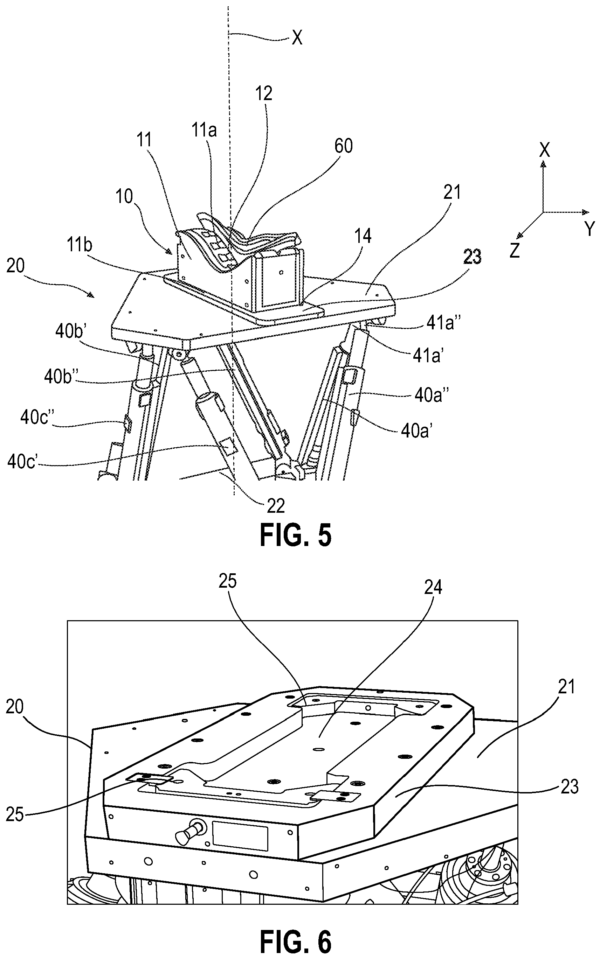

L'installation d'appairage 1 comprend notamment un support (référencé 10 sur la figure 5) configuré pour recevoir et maintenir le bouclier métallique 60, un hexapode de mouvement 20 portant notamment le support 10, un automate 30 et une unité informatique 49 de commande de l'hexapode 20 et de l'automate 30 en vue de réaliser l'appairage.

Comme représenté sur les figures 3, 4, 5 et 6, l'hexapode de mouvement 20 est un système mécanique comprenant six vérins 40a', 40a", 40b', 40b", 40c', 40c" permettant la mise en position et le mouvement d'objets suivant six degrés de liberté, donnés par les vérins 40a', 40a", 40b', 40b", 40c', 40c". Ce type de système est connu de l'homme du métier et peut notamment être trouvé dans le commerce. Cet hexapode 20 permet de générer un déplacement maîtrisé partout dans un repère XYZ dans la limite des capacités de l'installation, autrement dit, permet de déplacer le support 10 et donc le bouclier 60 le long et autour de trois axes du repère XYZ.

L'automate 30 comporte notamment des mors 31 configurés pour recevoir et maintenir la préforme 51. L'automate 30 comprend un portique 32 ou une cabine au centre duquel est situé l'hexapode de mouvement 20.

L'hexapode de mouvement 20 comprend une embase 22 et un plateau 21 situé à distance de l'embase 22 et destiné à recevoir le support 10. L'embase 22 est horizontale et s'étend sensiblement perpendiculairement à un axe X. L'axe X s'étend verticalement par rapport au sol 80 sur lequel se trouve l'installation 1. Le plateau 21 est situé au-dessus de l'embase 22, et s'étend sensiblement perpendiculairement à l'axe X.

Comme représenté sur la figure 4, le plateau 21 et l'embase 22 sont reliés l'un à l'autre par au moins trois paires de vérins 40a', 40a", 40b', 40b", 40c', 40c". Chacun de ces vérins 40a', 40a", 40b', 40b", 40c', 40c" comprend une première extrémité 41a', 41a", 41b', 41b", 41c', 41c" respectivement, et une seconde extrémité 42a', 42a", 42b', 42b", 42c', 42c", respectivement. Le plateau 21 comporte au moins trois premiers points, et par exemple six points, régulièrement répartis autour de l'axe X qui sont reliés aux premières extrémités 41a', 41a", 41b', 41b", 41c', 41c" des vérins 40a', 40a", 40b', 40b", 40c', 40c". L'embase 22 comporte six seconds points autour de l'axe X qui sont reliés aux secondes extrémités 42a', 42a", 42b', 42b", 42c', 42c" des vérins 40a', 40a", 40b', 40b", 40c', 40c".

L'hexapode de mouvement 20 comporte donc les trois paires de vérins 40a', 40a", 40b', 40b", 40c', 40c" desquelles on distingue une première paire de vérins 40a', 40a", une deuxième paire de vérins 40b', 40b" et une troisième paire de vérins 40c', 40c".

Un premier et un second vérins 40a', 40a" de la première paire de vérins 40a', 40a" comportent chacun une première extrémité 41a', 41a", articulée sur l'un des au moins trois premiers points du plateau 21, et une seconde extrémité 42a', 42a", articulée sur l'un des six seconds points de l'embase 22. La seconde extrémité 42a' du premier vérin 40a' est notamment située au niveau de la seconde extrémité 42a" du deuxième vérin 40a".

Un troisième et un quatrième vérins 40b', 40b" de la deuxième paire de vérins 40b', 40b" comportent chacun une première extrémité 41b', 41b", articulée sur l'un des au moins trois premiers points, et une seconde extrémité 42b', 42b", articulée sur l'un des six seconds points. La seconde extrémité 42b' du troisième vérin 40b' est notamment située au niveau de la seconde extrémité 42b" du quatrième vérin 40b"

Un cinquième et un sixième vérins 40c', 40c" de la troisième paire de vérins 40c', 40c" comportent chacun une première extrémité 41c', 41c", articulée sur l'un des au moins trois premiers points et une seconde extrémité 42c', 42c", articulée sur l'un des six seconds points. La seconde extrémité 42c' du cinquième vérin 40c' est notamment située au niveau de la seconde extrémité 42c" du sixième vérin 40c"

Les vérins 40a', 40a", 40b', 40b", 40c', 40c" sont notamment inclinés par rapport au plateau 21 ou à l'embase 22.

Comme représenté sur la figure 5, le support 10 comprend une plateforme 11 comportant une extrémité inférieure 11b et une extrémité supérieure 11a. L'extrémité supérieure 11a comprend une empreinte 12 de réception et de maintien du bouclier métallique 60. L'extrémité inférieure 11b comprend une plaque 14 fixée sur l'hexapode 20, plus précisément fixée sur le plateau 21 de l'hexapode 20. En particulier, l'extrémité inférieure11b est fixée sur un dispositif 23 de centrage et de serrage permettant de centrer et de serrer le support 10. Le dispositif 23, en particulier illustré sur la figure 6, est notamment rapporté sur le plateau 21 de l'hexapode 20. Le dispositif 23 comprend notamment une cavité 24 permettant en particulier de centrer le support 10. Le dispositif 23 comprend par exemple un système de serrage 25 comprenant notamment des mâchoires, permettant de serrer le support 10 sur l'hexapode 20.

L'unité informatique 49 permet notamment de créer une trajectoire personnalisée, en particulier en dessinant la trajectoire d'assemblage théorique sur un logiciel de conception assisté par ordinateur (CAO), plus précisément en dessinant une suite de points. Cette trajectoire permet de respecter des exigences dédiées ou de s'adapter à la préforme 51, au bouclier 60, à l'adhésif 55, et/ou à un autre paramètre jugé pertinent pour l'appairage. La trajectoire a notamment pour but de ne provoquer aucun contact entre le bouclier 60 et la préforme 51, afin de garantir un effort nul ou le plus faible possible durant la phase d'approche. La précision de la trajectoire est liée à la résolution du pas, c'est-à-dire à la distance entre deux points constituants le déplacement, permettant un pilotage précis pour arriver à la position d'arrêt. Cette précision permet ainsi d'obtenir une mesure parfaite du jeu 34 permettant d'atteindre les exigences d'appairage entre le bouclier 60 et la préforme 51.

L'unité informatique 49 peut également permettre de contrôler l'effort nécessaire pour enfoncer correctement le bouclier 60 sur la préforme 51, appelé également compensation d'effort. En effet, l'unité informatique 49 peut adapter le déplacement de l'hexapode 20 pour diminuer l'effort d'enfoncement du bouclier 60 sur l'adhésif 55, la trajectoire de déplacement réelle s'écartant ainsi de la trajectoire de déplacement théorique. Les points de la trajectoire restent inchangés mais le déplacement entre deux points peut donc automatiquement s'écarter de la trajectoire théorique dans la mesure où cela diminue l'effort. Cette compensation d'effort permet de réduire l'impact du contact de la préforme 51 sur le film adhésif 55 et le bouclier 60, notamment le chargement en contraintes de ces derniers.

Il est possible de choisir le point de la trajectoire à partir duquel cette compensation sera effective. En effet, elle n'est pas du tout nécessaire dans les premiers instants du déplacement lorsque le bouclier 60 et l'adhésif 55 ne sont pas encore en contact. Par ce biais, l'installation 1 s'efforce de réduire l'impact sur la préforme 51, l'adhésif 55 et le bouclier 60 notamment le chargement en contrainte de ces derniers. En effet, les contraintes accumulées peuvent déformer la préforme 51, le film adhésif 55, ou le bouclier 60 lors de l'appairage, c'est à dire lors de l'enfoncement du bouclier 60 sur la préforme 51. En outre, une fois les contraintes relâchées, c'est-à-dire une fois le maintien relâché, notamment lors d'un transfert de l'aube 50 en cas de polymérisation réalisée ultérieurement et hors machine d'assemblage, ces contraintes peuvent entraîner des déplacements, notamment le déplacement du bouclier 60 par rapport à la préforme 51, pouvant affecter ainsi la dimension du jeu 34. La compensation de l'effort proposée par l'invention génère donc une trajectoire propre à chaque pièce permettant de compenser les déplacements du bouclier 60 par rapport à la préforme 51 dus aux relâchements des contraintes.

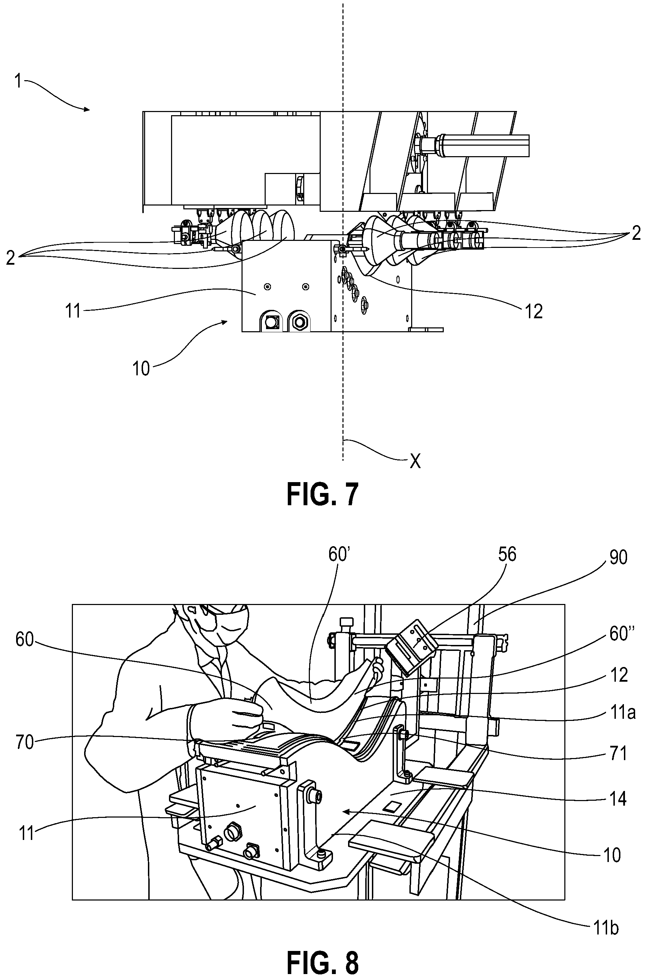

Une variante de mode de réalisation consiste à enregistrer toutes les trajectoires réalisées afin d'obtenir un « apprentissage » pour définir une trajectoire moyenne venant remplacer la trajectoire théorique réalisée par le logiciel de CAO. Ainsi, la compensation d'effort et les mouvements de l'hexapode 20 seront minimisés, rendant ainsi l'installation 1 plus efficiente. Comme représenté sur la figure 7, l'installation d'appairage 1 comprend par exemple au moins un élément de chauffage 2 porté en particulier par l'automate 30, tel que par exemple une lampe infrarouge IR, notamment plusieurs lampes infrarouges IR. La ou les lampes avec rayonnement infrarouge IR peuvent ainsi venir se placer proche du bouclier 60, notamment de part et d'autre de ce dernier. L'unité informatique 49 permet notamment de piloter la fonction de chauffage de l'installation 1, en particulier son déclenchement et en outre sa puissance selon les exigences du procédé. Le chauffage de l'adhésif 55 permet en particulier de réduire la viscosité de l'adhésif 55 et ainsi de réduire l'effort nécessaire pour l'assemblage du bouclier 60.

La présence de l'élément de chauffage 2 permet notamment d'éviter à l'opérateur de devoir appliquer lui-même un pistolet à air chaud dirigé sur le bord d'attaque, tout en garantissant un chauffage de meilleur qualité et plus consistant de l'adhésif 55.

L'automate 30 comprend notamment un outil de mesure sans contact (non représenté), et par exemple optique. L'outil de mesure sans contact peut par exemple réaliser la mesure du jeu 34 en temps réel permettant ainsi de piloter l'appairage directement par cette valeur et non plus par les points de trajectoire définis par le logiciel CAO, comme expliqué précédemment.

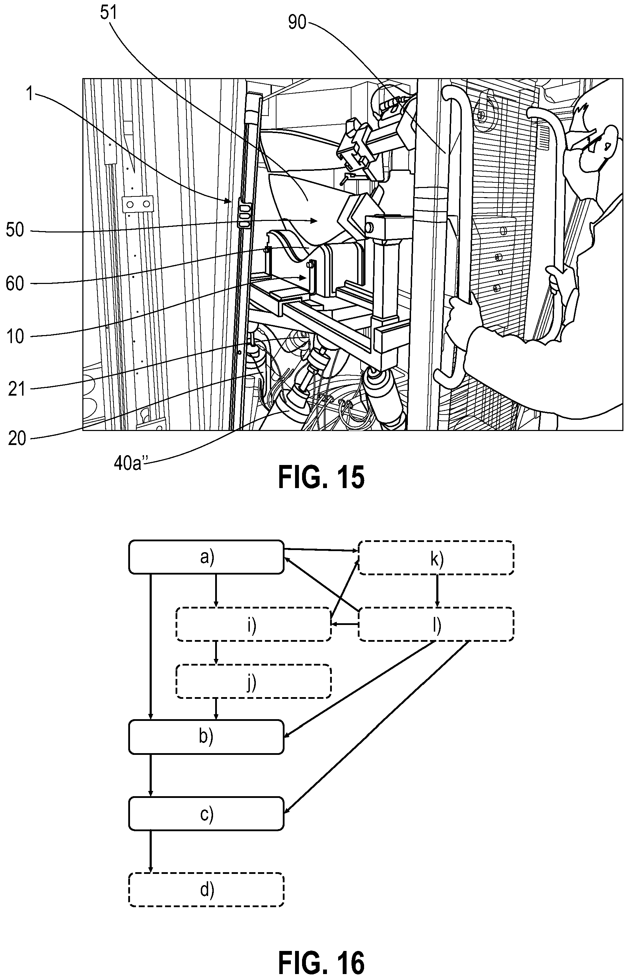

Comme représenté sur les figures 8 à 15 et sur l'organigramme de la figure 16, l'invention concerne également un procédé d'appairage du bouclier métallique 60 sur le bord d'attaque 51a de la préforme 50 en matériau composite pour la fabrication de l'aube 50 de turbomachine d'aéronef, au moyen de l'installation 1 telle que décrite précédemment.

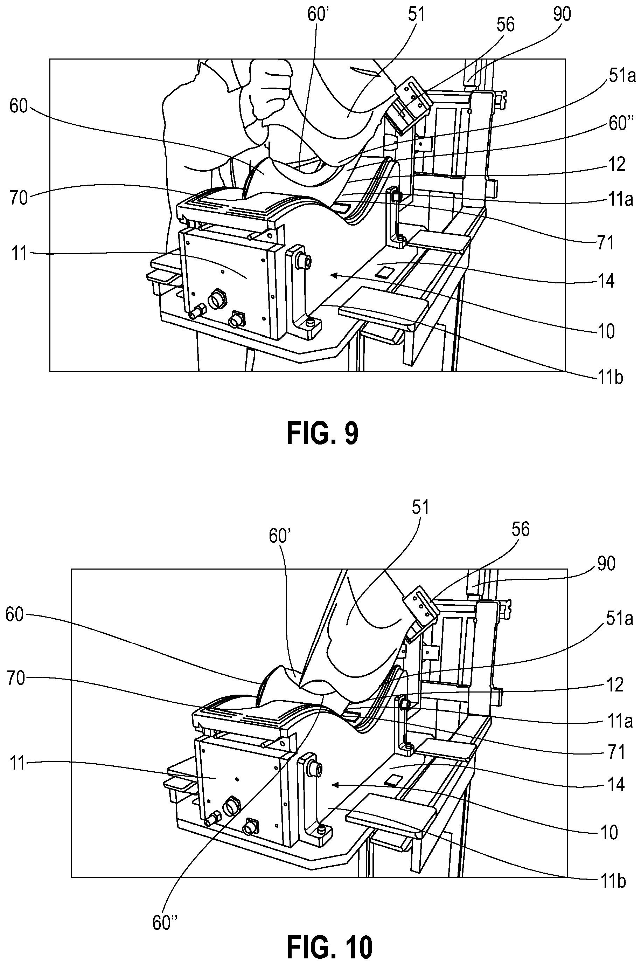

Le procédé comprend en particulier une étape a) (figure 8) consistant à positionner le bouclier métallique 60 sur le support 10. Le bouclier 60 est positionné et maintenu sur le support 10 de sorte que l'espace soit orienté vers le haut. La position est assurée notamment par des butées 70 et un serrage 71 avec des pinces qui ont en particulier une surface de contact ayant un profil complémentaire au profil du bouclier 60. Cette position (figure 9) est définitive et significative pour la suite de l'assemblage. A ce moment-là, le support 10 est par exemple positionné sur un chariot mobile 90 mais pourrait également déjà être dans l'installation 1.

Le procédé comprend par exemple également une étape i) (figures 9, 10 et 11), entre l'étape a) et une étape b), consistant à fixer une extrémité de la préforme 51 à un bras 56 solidaire du support 10, de façon à ce que la préforme 51 s'étende à proximité du bouclier 60.

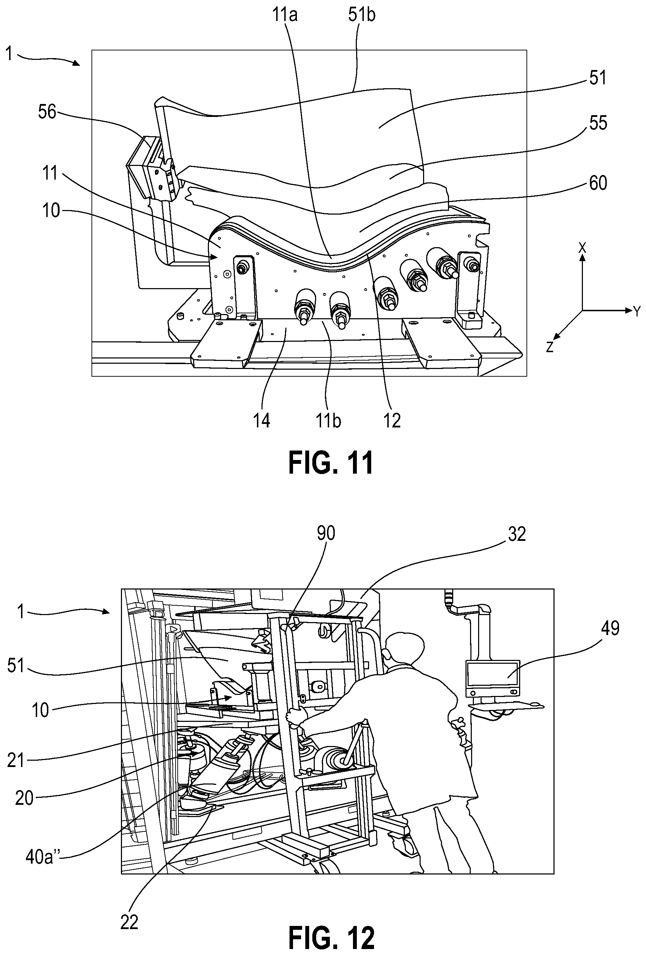

Le procédé comprend notamment une étape j) (figure 12), entre l'étape i) et l'étape b), consistant à positionner le support 10 sur l'hexapode 20, en particulier sur le dispositif 23 de centrage et de serrage permettant de garantir la position du support 10 dans l'installation 1 d'appairage. Le positionnement/chargement du support 10 dans l'installation 1 peut se faire manuellement ou de manière automatique, par exemple par l'intermédiaire d'un bras robotisé. De manière similaire, la fixation ou clampage du support 10 sur l'hexapode 20 peut se faire manuellement ou de manière automatique, notamment par l'intermédiaire de vérin hydraulique.

Le procédé comprend en outre une étape b) (figure 12) dans laquelle la préforme 51 est prise par les mors 31 de l'automate 30. Dans le cas où la préforme 51 a été fixée sur le bras 56 (étape i), la préforme 51 sera par exemple automatiquement placée dans le mors 31 de l'automate 30 lors de la réalisation de l'étape b).

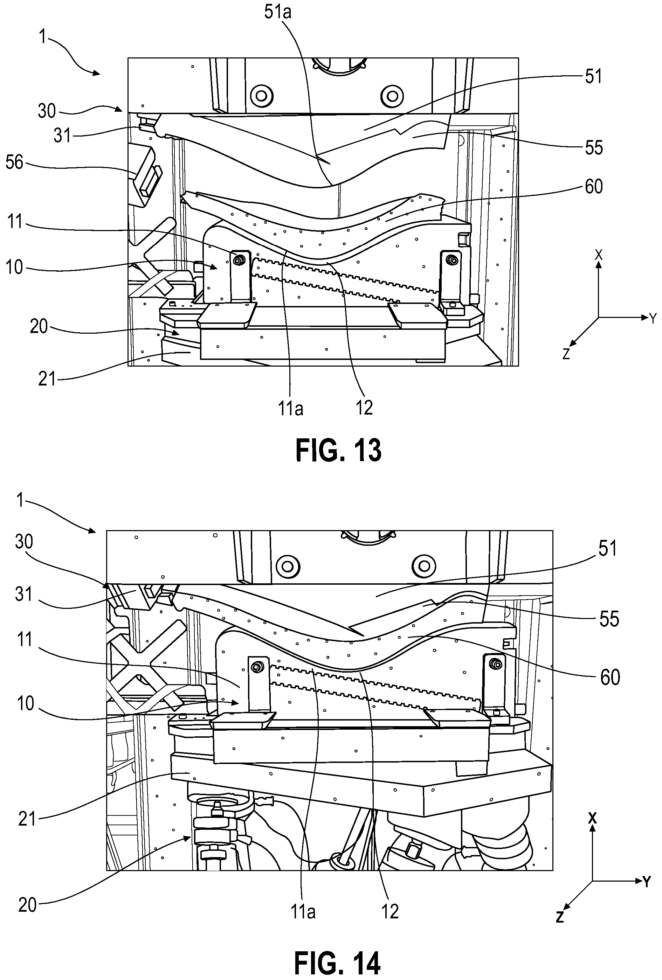

Le procédé comprend également une étape c) (figures 13 et 14) qui correspond à l'appairage du bouclier 60 sur la préforme 51 de façon à ce que le bord d'attaque 51a de la préforme 51 soit engagé dans l'espace. Lors de cette étape, le bouclier 60 est engagé grâce au déplacement de l'hexapode 20 capable de se déplacer selon les trois mouvements de translation et les trois mouvements de rotation comme expliqué précédemment. L'hexapode 20 se déplace selon la trajectoire sélectionnée pour s'arrêter ensuite au point d'arrêt choisi pour respecter l'exigence du jeu 34 requise ou est guidé par l'outil de mesure sans contact.

Le procédé comprend notamment une étape k), avant l'étape c), consistant à appliquer l'adhésif 55 sur le bord d'attaque 51a de la préforme 51 et/ou sur le bouclier 60.

Le procédé comprend par exemple une étape |) après l'étape k) consistant à chauffer l'adhésif 55, notamment à l'aide de l'élément de chauffage 2 comme expliqué précédemment.

Le procédé comprend en particulier une étape d), après l'étape c), consistant à vérifier l'appairage en mesurant, au niveau d'une extrémité de la préforme 51, une dimension du jeu 34 laissé libre entre le bord d'attaque 51a de la préforme 51 et le bouclier 60. Cette mesure est notamment réalisée par une mesure sans contact et par exemple une mesure optique comme expliqué précédemment.

Le procédé comprend également une étape e) de déchargement (figure 15) de l'assemblage consistant à récupérer le support 10 avec l'aube assemblée 50 suivant une procédure inverse au chargement de l'étape j).

Ainsi, l'automatisation de l'assemblage est paramétrable, permettant de rendre le procédé d'appairage selon l'invention précis, répétable et reproductible tout en réduisant le temps nécessaire pour sa réalisation. En effet, l'appairage nécessite peu, voir aucune action de l'opérateur car tout est automatique, la fonction de chauffage de l'adhésif étant notamment intégrée dans l'installation ainsi que la compensation de l'effort.

## Revendications

1. Installation d'appairage (1) d'un bouclier métallique (60) sur un bord d'attaque (51a) d'une préforme (51) en matériau composite pour la fabrication d'une aube (50) de turbomachine d'aéronef, cette installation (1) comprenant :
- un support (10) configuré pour recevoir et maintenir le bouclier métallique (60),
- un hexapode de mouvement (20) qui porte ledit support (10) et qui est apte à déplacer le support (10) le long et autour de trois axes d'un repère XYZ,
- un automate (30) comportant des mors (31) configuré pour recevoir et maintenir la préforme (51), et
- une unité informatique (49) de commande de l'hexapode (20) et de l'automate (30) en vue de réaliser l'appairage.

2. Installation (1) selon la revendication 1, dans laquelle l'hexapode de mouvement (20) comprend une embase (22) et un plateau (21) situé à distance de l'embase (22) et destiné à recevoir ledit support (10), le plateau (21) et l'embase (22) étant reliés l'un à l'autre par au moins trois paires de vérins (40a', 40a", 40b', 40b", 40c', 40c"), le plateau (21) comportant au moins trois premiers points régulièrement répartis autour d'un axe (X) qui sont reliés à des premières extrémités (41a', 41a", 41b', 41b", 41c', 41c" ) des vérins (40a', 40a", 40b', 40b", 40c', 40c"), et l'embase (22) comportant six seconds points autour de l'axe (X) qui sont reliés à des secondes extrémités (42a', 42a", 42b', 42b", 42c', 42c") des vérins (40a', 40a", 40b', 40b", 40c', 40c").

3. Installation (1) selon la revendication 2, dans laquelle l'embase (22) est horizontale et le plateau (21) est situé au-dessus de l'embase (22).

4. Installation (1) selon l'une des revendications précédentes, dans laquelle ledit support (10) comprend une plateforme (11) comportant une extrémité inférieure fixée sur l'hexapode (20) et une extrémité supérieure (11a) comportant une empreinte (12) de réception et de maintien du bouclier métallique (60).

5. Installation (1) selon l'une des revendications précédentes, dans laquelle elle comprend en outre au moins un élément de chauffage (2) porté par l'automate (30), tel que par exemple une lampe IR.

6. Installation (1) selon l'une des revendications précédentes, dans laquelle l'automate (30) comprend un portique (32) ou une cabine au centre duquel est situé ledit hexapode de mouvement (20).

7. Installation (1) selon l'une des revendications précédentes, dans laquelle elle comprend en outre un outil de mesure sans contact, et par exemple optique, d'une dimension d'un jeu (34) laissé libre entre le bord d'attaque (51a) de la préforme (51) et le bouclier (60) après appairage.

8. Procédé d'appairage d'un bouclier métallique (60) sur un bord d'attaque (51a) d'une préforme (51) en matériau composite pour la fabrication d'une aube (50) de turbomachine d'aéronef, au moyen d'une installation (1) selon l'une des revendications précédentes, dans lequel il comprend les étapes consistant à :
a) positionner le bouclier métallique (60) sur le support (10), ce bouclier métallique (60) ayant une forme générale de dièdre et comportant deux ailes (60', 60") reliées ensemble et définissant entre elles un espace, le bouclier (60) étant maintenu sur le support (10) de sorte que ledit espace soit orienté vers le haut,
b) prise de la préforme (51) par les mors (31) de l'automate (30), et
c) appairage du bouclier (60) sur la préforme (51) de façon à ce qu'un bord d'attaque (51a) de la préforme (51) soit engagé dans ledit espace.

9. Procédé selon la revendication 8, comprenant, entre les étapes a) et b), une étape consistant à :
i) fixer une extrémité de la préforme à un bras (56) solidaire du support (10), de façon à ce que la préforme (51) s'étende à proximité du bouclier (60).

10. Procédé selon la revendication 9, comprenant, entre les étapes i) et b), une étape consistant à :
j) positionner le support (10) sur l'hexapode (20).

11. Procédé selon l'une des revendications 8 à 10, comprenant, avant l'étape c), une étape consistant à :
k) appliquer un adhésif (55) sur le bord d'attaque (51a) de la préforme (51) et/ou sur le bouclier (60).

12. Procédé selon la revendication 11, comprenant, après l'étape k), une étape consistant à :
|) chauffer l'adhésif (55).

13. Procédé selon l'une des revendications 8 à 12, comprenant, après l'étape c), une étape consistant à :
d) vérifier l'appairage en mesurant, au niveau d'une extrémité de la préforme (51), une dimension d'un jeu (34) laissé libre entre le bord d'attaque (51a) de la préforme (51) et le bouclier (60).

14. Procédé selon la revendication 13, dans lequel l'étape d) est réalisée par une mesure sans contact et par exemple une mesure optique.

## Patentansprüche

1. Anlage zur Paarung (1) eines Metallschilds (60) mit einer Anströmkante (51a) einer Vorform (51) aus Verbundmaterial zur Herstellung einer Schaufel (50) eines Turbotriebwerks eines Luftfahrzeugs, wobei diese Anlage umfasst:
- einen Träger (10), der konfiguriert ist, um den Metallschild (60) aufzunehmen und zu halten,
- einen Bewegungshexapoden (20), der den Träger (10) trägt und der in der Lage ist, den Träger (10) entlang drei Achsen eines Bezugspunktes XYZ und um diese herum zu verschieben,
- einen Automaten (30), der Backen (31) umfasst, die konfiguriert sind, um die Vorform (51) aufzunehmen und zu halten, und
- eine Informatikeinheit (49) zur Steuerung des Hexapoden (20) und des Automaten (30), um die Paarung durchzuführen.

2. Anlage (1) nach Anspruch 1, wobei der Bewegungshexapod (20) eine Grundplatte (22) und ein Plateau (21) umfasst, das sich im Abstand von der Grundplatte (22) befindet und dazu bestimmt ist, den Träger (10) aufzunehmen, wobei das Plateau (21) und die Grundplatte (22) durch mindestens drei Paare von Zylindern (40a', 40a", 40b', 40b", 40c', 40c") miteinander verbunden sind, wobei das Plateau (21) mindestens drei erste regelmäßig um eine Achse (X) herum verteilte Punkte umfasst, die mit ersten Enden (41a', 41a", 41b', 41b", 41c', 41c" ) der Zylinder (40a', 40a", 40b', 40b", 40c', 40c") verbunden sind, und die Grundplatte (22) sechs zweite Punkte um die Achse (X) herum umfasst, die mit zweiten Enden (42a', 42a", 42b', 42b", 42c', 42c") der Zylinder (40a', 40a", 40b', 40b", 40c', 40c") verbunden sind.

3. Anlage (1) nach Anspruch 2, wobei die Grundplatte (22) horizontal vorliegt und das Plateau (21) sich oberhalb der Grundplatte (22) befindet.

4. Anlage (1) nach einem der vorstehenden Ansprüche, wobei der Träger (10) eine Plattform (11) umfasst, die ein an dem Hexapoden (20) befestigtes unteres Ende und ein oberes Ende (11a) umfasst, das eine Prägung (12) zur Aufnahme und zum Halten des Metallschilds (60) umfasst.

5. Anlage (1) nach einem der vorstehenden Ansprüche, wobei sie weiter mindestens ein Erwärmungselement (2) umfasst, das von dem Automaten (30) getragen wird, wie zum Beispiel eine IR-Lampe.

6. Anlage (1) nach einem der vorstehenden Ansprüche, wobei der Automat (30) einen Portalrahmen (32) oder eine Kabine umfasst, in deren Mitte sich der Bewegungshexapod (20) befindet.

7. Anlage (1) nach einem der vorstehenden Ansprüche, wobei sie weiter ein kontaktloses, und zum Beispiel optisches, Messinstrument einer Abmessung eines Spiels (34) umfasst, das nach der Paarung zwischen der Anströmkante (51a) der Vorform (51) und dem Schild (60) freigelassen wurde.

8. Verfahren zur Paarung eines Metallschilds (60) mit einer Anströmkante (51a) einer Vorform (51) aus Verbundmaterial zur Herstellung einer Schaufel (50) eines Turbotriebwerks eines Luftfahrzeugs mittels einer Anlage (1) nach einem der vorstehenden Ansprüche, wobei es die Schritte umfasst, bestehend aus:
a) Positionieren des Metallschilds (60) auf dem Träger (10), wobei dieser Metallschild (60) eine allgemeine Diederform aufweist und zwei Flügel (60', 60") umfasst, die zusammen verbunden sind und zwischen ihnen einen Raum definieren, wobei der Schild (60) derart auf dem Träger (10) gehalten wird, dass der Raum nach oben orientiert ist,
b) Ergreifen der Vorform (51) durch die Backen (31) des Automaten (30) und
c) Paarung des Schildes (60) mit der Vorform (51) auf eine Weise, dass eine Anströmkante (51a) der Vorform in dem Raum in Eingriff gebracht wird.

9. Verfahren nach Anspruch 8, das zwischen den Schritten a) und b) einen Schritt umfasst, bestehend aus:
i) Befestigen eines Endes der Vorform an einen Arm (56), der mit dem Träger (10) einstückig ist, auf eine Weise, dass die Vorform (51) sich in die Nähe des Schildes (60) erstreckt.

10. Verfahren nach Anspruch 9, das zwischen den Schritten i) und b) einen Schritt umfasst, bestehend aus:
j) Positionieren des Trägers (10) auf den Hexapoden (20).

11. Verfahren nach einem der Ansprüche 8 bis 10 das vor dem Schritt c) einen Schritt umfasst, bestehend aus:
k) Auftragen eines Klebstoffs (55) auf die Anströmkante (51a) der Vorform (51) und/oder auf den Schild (60).

12. Verfahren nach Anspruch 11, das nach dem Schritt k) einen Schritt umfasst, bestehend aus:
I) Erwärmen des Klebstoffs (55).

13. Verfahren nach einem der Ansprüche 8 bis 12, das nach dem Schritt c) einen Schritt umfasst, bestehend aus:
d) Überprüfen des Paarung, indem auf Höhe eines Endes der Vorform (51) eine Abmessung eines Spiels (34) gemessen wird, das zwischen der Anströmkante (51a) der Vorform (51) und dem Schild (60) frei gelassen wurde.

14. Verfahren nach Anspruch 13, wobei der Schritt d) durch eine kontaktlose Messung und durch zum Beispiel eine optische Messung durchgeführt wird.

## Claims

1. A pairing facility (1) for pairing a metal shield (60) on a leading edge (51a) of a composite material preform (51) for manufacturing an aircraft turbine engine vane (50), said facility (1) comprising:
- a support (10) configured to receive and hold the metal shield (60),
- a movement hexapod (20) which carries said support (10) and which is able to move the support (10) along and around three axes of an XYZ coordinate system,
- an automaton (30) comprising jaws (31) configured to receive and hold the preform (51), and
- a computing unit (49) for controlling the hexapod (20) and the automaton (30) with a view to producing the pairing.

2. The facility (1) according to claim 1, wherein the movement hexapod (20) comprises a base (22) and a plate (21) situated at a distance from the base (22) and intended to receive said support (10), the plate (21) and the base (22) being connected to each other by at least three pairs of cylinders (40a', 40a", 40b', 40b", 40c', 40c"), the plate (21) comprising at least three first points regularly distributed around an axis (X) which are connected to first ends (41a', 41a", 41b', 41b", 41c', 41c") of the cylinders (40a', 40a", 40b', 40b", 40c', 40c"), and the base (22) comprising six second points about the axis (X) which are connected to second ends (42a', 42a", 42b', 42b", 42c', 42c") of the cylinders (40a', 40a", 40b', 40b", 40c', 40c").

3. The facility (1) according to claim 2, wherein the base (22) is horizontal and the plate (21) is located above the base (22).

4. The facility (1) according to one of the preceding claims, wherein said support (10) comprises a platform (11) comprising a lower end attached to the hexapod (20) and an upper end (11a) comprising a recess (12) for receiving and holding the metal shield (60).

5. The facility (1) according to one of the preceding claims, wherein it also comprises at least one heating element (2) carried by the automaton (30), such as an IR lamp, for example.

6. The facility (1) according to one of the preceding claims, wherein the automaton (30) comprises a gantry (32) or a cabin at the center of which said movement hexapod (20) is located.

7. The facility (1) according to one of the preceding claims, wherein it further comprises a tool for contactless, and for example optical, measurement of a dimension of a clearance (34) left free between the leading edge (51a) of the preform (51) and the shield (60) after pairing.

8. A method for pairing a metal shield (60) on a leading edge (51a) of a composite material preform (51) for manufacturing an aircraft turbine engine vane (50), by means of a facility (1) according to one of the preceding claims, wherein it comprises the steps consisting in:
a) positioning the metal shield (60) on the support (10), this metal shield (60) having the general shape of a dihedron and comprising two wings (60', 60") connected together and defining a space between them, the shield (60) being held on the support (10) so that said space is oriented upwards,
b) gripping the preform (51) by the jaws (31) of the automaton (30), and
c) pairing the shield (60) on the preform (51) so that a leading edge (51a) of the preform (51) is engaged in said space.

9. The method according to claim 8, comprising, between steps a) and b), a step consisting of:
i) attaching one end of the preform to an arm (56) secured to the support (10), so that the preform (51) extends close to the shield (60).

10. The method according to claim 9, comprising, between steps i) and b), a step consisting of:
j) positioning the support (10) on the hexapod (20).

11. The method according to one of claims 8 to 10, comprising, before step c), a step consisting of:
k) applying an adhesive (55) to the leading edge (51a) of the preform (51) and/or to the shield (60).

12. The method according to claim 11, comprising, after step k), a step consisting of:
l) heating the adhesive (55).

13. The method according to one of claims 8 to 12, comprising, after step c), a step consisting of:
d) checking the pairing by measuring, at one end of the preform (51), a dimension of a clearance (34) left free between the leading edge (51a) of the preform (51) and the shield (60).

14. The method according to claim 13, wherein step d) is carried out by a contactless measurement and for example an optical measurement.
